# EUROPEAN PATENT SPECIFICATION

(11) **EP 1 932 428 B1**
(45) Date of publication and mention of the grant of the patent: **10.06.2009**
(21) Application number: 06126239.0
(22) Date of filing: 15.12.2006
(51) Int. Cl.: A22B 3/08

(54) **Apparatus and method for stunning poultry**
Vorrichtung und Verfahren zur Geflügelbetäubung
Appareil et procédé pour assommer la volaille

(43) Date of publication of application: 18.06.2008
(73) Proprietor: Rico Research B.V., 1531 PB WORMER (NL)
(72) Inventor: Koops, Hendricus, 6713 AT, Ede (NL)
(74) Representative: Voncken, Bartholomeus Maria Ch.

(56) References cited:
- EP-A- 1 665 935
- GB-A- 2 302 639
- US-A- 4 153 971

## Description

The invention firstly relates to an apparatus for stunning poultry, comprising a power source, first means connected to a first pole of the power source for engaging the head of the poultry and second means connected to the opposite pole of the power source for engaging an opposite body part of the poultry, as known from EP-A-1.665.935.

Although not strictly necessary, in practice the first means of such an apparatus for stunning poultry will be connected to the positive pole of the power source, while the second means are connected to the negative pole of the power source. In a known apparatus of this type said second means are connected to a suspension conveyor for conveying the poultry while suspended from their legs. Thus, the negative pole of the power source then will engage the legs of the poultry.

Such an apparatus will encounter a severe problem, because the legs of poultry are covered with a thick skin which only poorly conducts electrical current. Thus, for obtaining satisfying stunning results one should apply high voltages. However, in the case that such high voltage are applied and, unexpectedly, the skin of the legs is better conductive than expected, such high voltages can cause damage to the poultry, which negatively influences the quality of the flesh after slaughtering. Especially, in such a case strong contractions of the breast muscles will occur which will lead to bleedings which give the final product (breast flesh) an unattractive appearance.

It is an object of the present invention to provide an improved apparatus of the type referred to above.

Thus, in accordance with the present invention, the second means comprise a brace for spreading the legs of the poultry and engaging the groin region of the poultry.

It is believed that the skin at the groin region of the poultry is more conductive then at the remainder of the legs, such that an excellent conduction of the electric current form the brace towards the poultry will occur. However, not only will the conductivity be increased, but it also will be more stable among a series of poultry, such that the conductivity can be predicted more precisely. The result is, that a more precise setting of the voltage between the first and second pole of the power source can be chosen, leading to reproducible results.

The use of a brace for spreading the legs is very advantageous, because such a brace also is used for positioning and stabilising the poultry during many stages of the processing thereof and therefore already is present in many cases and does not have to be provided as a new part. The brace, then, only should be connected to the respective, opposite pole of the power source.

Preferably the brace is substantially U-shaped with two outer parts connected by a curved top, wherein said outer parts are intended to engage the poultry at the groin region. This shape of the brace not only yields good results on the field of spreading the legs, but also on the field of stunning the poultry (probably because it provides a firm contact between its outer parts and the groin region of the poultry).

Preferred embodiments of the apparatus according to the present invention are subject of the subclaims.

Secondly the invention relates to a method for stunning poultry.

In accordance with the present invention said method comprises connecting the head of the poultry to a first pole of a power source, and spreading the legs and engaging the groin region of the poultry using a brace connected to the second pole of the power source.

Preferred embodiments of the method according to the present invention are subject of the subclaims.

Hereinafter the invention will be elucidated while referring to the drawing, in which an embodiment of the apparatus according to the present invention is illustrated.
Figure 1 shows, schematically, a side elevational view of an embodiment of the apparatus;
figure 2 shows, on a reduced scale and extremely schematically, a top plan view, and
figure 3 shows on an enlarged scale a brace.

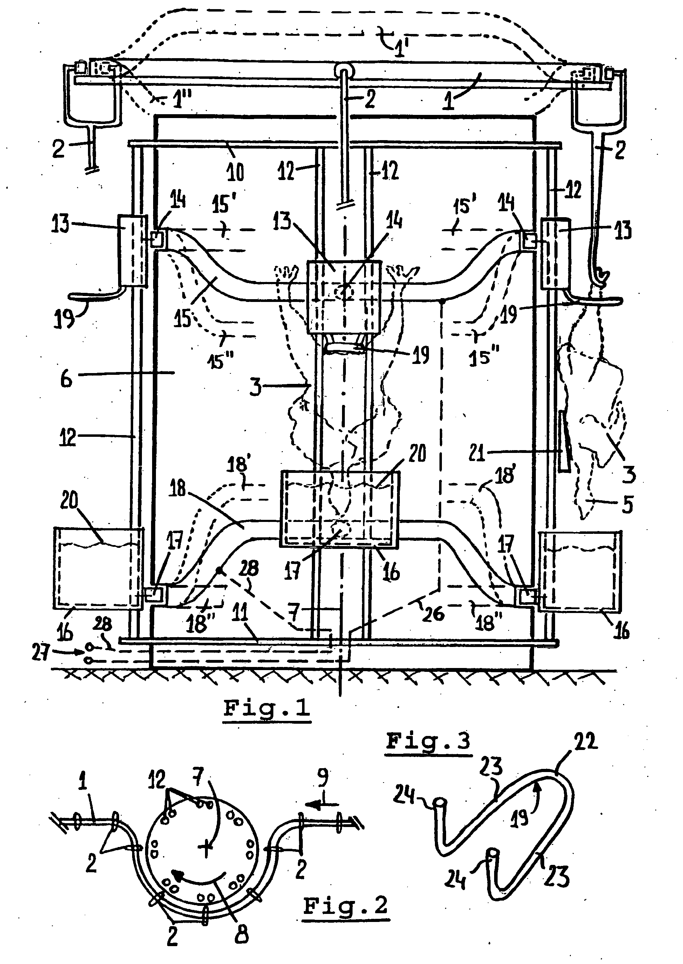

Firstly referring to figure 1, an embodiment of an apparatus for stunning poultry is illustrated which is meant for cooperation with a suspension conveyor 1. Such a suspension conveyor, which is known per se, comprises shackles 2 from which poultry 3 is suspended from their legs 4. That means that the head 5 of the poultry 3 is directed downwards.

In the illustrated embodiment the apparatus according to the present invention comprises a rotating carousel-like device which is provided with a stationary core 6. In a manner not illustrated in detail this stationary core 6 carries a frame which can be rotated around a central axis 7. In figure 2 the direction of rotation of the frame around the central axis 7 has been indicated by arrow 8. Likewise, the direction of travel of the suspension conveyor 1 has been indicated by arrow 9. As illustrated, the suspension conveyor 9 partly encircles the carousel-like device.

Again referring to figure 1, the frame of the carousel-like device comprises an upper support plate 10 and a lower support plate 11. Between these support plates 10 and 11 pairs of guiding rods 12 extend vertically. As illustrated clearly in figure 2, a number of said pairs of guiding rods 12 is spaced at regular intervals along the circumference of the carousel-like device. In the embodiment illustrated schematically in figure 2 eight of such pairs are provided; in figure 1, however, some of these pairs have been omitted for simplifying the drawing.

The guiding rods 12 illustrated in figure 1 at the right-hand side correspond with the guiding rods 12 at the three o'clock position in figure 2; likewise the guiding rods 12 positioned centrally in figure 1 correspond with the guiding rods at the six o'clock position in figure 2, whereas the guiding rods 12 at the left-hand position in figure 1 correspond with the nine o'clock position in figure 2.

Each pair of guiding rods 12 firstly carries an upper sliding block 13 which carries a follower roll 14 that cooperates with a stationary curve 15 in the stationary core 6. Further each pair of guiding rods 12 carries a second sliding block 16 which carries a follower roll 17 that cooperates with a stationary curve 18 in the stationery core 6.

The upper sliding block 13 carries a brace 19 which is meant for spreading the legs of the poultry and stabilising the position of the poultry on one hand, and for contacting the groin region of the poultry 3 on the other hand; the lower sliding block 16 is shaped as a liquid container containing a conductive fluid 20.

The curve 15, roll 14, sliding block 13 and brace 19 are made of a conductive material, such that through line 26 the brace 19 is connected to a first pole of the power source 27, preferably the negative pole. Likewise, the conductive fluid 20 is connected to the opposite pole (preferably the positive pole) of the power source 27 through line 28, curve 18, roll17 and sliding block 16.

In operation poultry 3, which is conveyed by the suspension conveyor 1, reaches the carousel-like device at the three o'clock position illustrated in figure 2. As shown in figure 1, in this position the upper sliding block 13 is at a high position, in which the brace 19 does not engage the poultry 3 at the groin region yet (it is noted however that the brace is already positioned between the legs of the poultry). Likewise the lower sliding block (liquid container) 16 is in a low position, in which the head 5 of the poultry 3 is above the conductive liquid 20.

When the frame of the device rotates as indicated by arrow 8 in figure 2, the follower rolls 14 and 17 of the sliding blocks 13 and 16, respectively, will follow the respective stationary curves 15 and 18, respectively, and will move downwardly and upwardly, respectively, to the positions illustrated in figure 1 in the central location. In these positions the brace 19 has contacted the groin region of the poultry 3, whereas the head 5 of the poultry is submerged in the conductive fluid 20 in the liquid container 16. Now the power source 27 is activated and an electrical current runs through the body of the poultry, stunning the bird.

During a continued rotation of the device the upper sliding block 13 again will move to its high position, whereas the liquid container 16 will move towards its low position, in which the bird 3 again is free and wherein there is no contact anymore between the brace 19 and groin region of the poultry (in figure 1 the bird has not been illustrated in this location, but it will assume a position which corresponds with the position illustrated at the right-hand side of the figure).

Each successive bird arriving along the suspension conveyor 1 will be processed in this manner.

It is also possible that the poultry is movable upwards and downwards through an appropriate shape of the suspension conveyor 1. The shape 1' thereof than will correspond with the shape 15' of the upper curve and shape 18' of the lower curve to obtain the appropriate relative movements between the poultry 3, brace 19 and container 16. Likewise the shape 1" thereof will correspond with the shape 15" of the upper curve and shape 18" of the lower curve.

In figure 1 further support means 21 have been illustrated schematically, which serve for locating and maintaining the poultry 3 in a correct position. Such means may be stationary, but also can be movable, for example under influence of the cooperation between curve means and follower means.

Figure 3 shows a perspective view of the brace 19. It comprises an elongate rod which is bent into a U-shaped configuration, such that the forward end defines a curved top 22 connecting two outer parts 23. Said outer parts 23 are intended to engage the poultry at the groin region. The ends 24 of the outer parts 23 will be attached to the sliding block 13.

In another embodiment not illustrated, the poultry is oriented horizontally during the stunning process, for example supported at its chest or back (e.g. by means corresponding to the support means 21).

The invention is not limited to the embodiment described before, which may be varied widely within the scope on the invention as defined by the appending claims.

## Claims

1. Apparatus for stunning poultry (3), comprising a power source (27), first means (20), connected to a first pole of the power source for engaging the head (5) of the poultry and second means (19) connected to the opposite pole of the power source for engaging an opposite body part of the poultry, **characterised in that** the second means comprise a brace (19) for spreading the legs of the poultry and engaging the groin region of the poultry.

2. Apparatus according to claim 1, wherein the brace (19) is substantially U-shaped with two outer parts (23) connected by a curved top (22), wherein said outer parts are intended to engage the poultry at the groin region.

3. Apparatus according to claim 1 or 2, comprising means (2) for suspending the poultry (3) from the legs.

4. Apparatus according to claim 3 and comprising a suspension conveyor (1), for conveying the poultry while suspended from the legs, and further comprising a rotating carousel-like device which carries at regular intervals along its circumference a number of braces (19) for spreading the legs of the poultry, wherein means (14,15) are provided for realising a relative upward and downward movement of the braces relative to poultry suspended from the suspension conveyor when the suspension conveyor conveys the poultry around part of the circumference of the carousel-like device in coordination with the rotation of the carousel-like device.

5. Apparatus according to claim 4, wherein the braces (19) are movable upwards and downwards along respective guides (12) attached to the carousel-like device through the cooperation between a stationary curve means (15) and movable follower means (14) attached to the braces.

6. Apparatus according to claim 4, wherein the braces (19) have a stationary vertical position and wherein the suspension conveyor (1',1") has successive sloping parts for moving the poultry upwards and downwards relative to the braces.

7. Apparatus according to claim 1 or 2, comprising a support for supporting the breast or back of the poultry in a substantially horizontal position.

8. Apparatus according to any of the previous claims, wherein the first means comprise an electrically conductive liquid (20) in which the head (5) of the poultry is to be submerged and wherein the liquid is contained in a number of successive containers (16), such that during operation of the apparatus each separate container will receive only one poultry head simultaneously.

9. Apparatus according to claim 8 and meant for cooperation with a suspension conveyor for conveying the poultry while suspended from their legs, comprising a rotaing carousel-like device which carries at regular intervals along its circumference a number of liquid containers (16), wherein a relative upward and downward movement between the containers and the poultry occurs when the suspension conveyor conveys the poultry around part of the circumference of the carousel-like device.

10. Apparatus according to claim 9, wherein the liquid containers (16), are movable upwards and downwards along respective guides (12) attached to the carousel-like device through the cooperation between a stationary curve means (18) and movable follower means (17) attached to the liquid containers.

11. Apparatus according to claim 10, wherein the liquid containers (16) have a stationary vertical position and wherein the suspension conveyor has successive sloping parts for moving the poultry upwards and downwards relative to the liquid containers.

12. Method for stunning poultry, comprising connecting the head (5) of the poultry (3) to a first pole of a power source (27), and : spreading the legs and engaging the groin region of the poultry using a brace (19) connected to the second pole of the power source (27).

13. Method according, to claim 12, wherein the brace (19), is substantially U-shaped with two outer parts (23) connected by a curved top (22) wherein said outer parts are engaged with the legs of the poultry at the groin region.

14. Method according to any of the claims 12-13, wherein the poultry during stunning is kept in a Position suspended from its legs.

15. Method according to any of the claims 12-13 wherein the poultry during stunning is supported at the chest or back in a substantially horizontal position.

## Patentansprüche

1. Vorrichtung zur Geflügelbetäubung (3), die eine Stromquelle (27), eine erste Einrichtung (20), die mit einem ersten Pol der Stromquelle zur Ineingriffnahme des Kopfes (5) des Geflügels verbunden ist, und eine zweite Einrichtung (19) aufweist, die mit dem entgegengesetzten Pol der Stromquelle zur Ineingriffnahme eines entgegengesetzten Körperteils des Geflügels verbunden ist, **dadurch gekennzeichnet, daß** die zweite Einrichtung eine Strebe (19) zum Spreizen der Beine des Geflügels und zur Ineingriffnahme der Leistengegend des Geflügels aufweist.

2. Vorrichtung nach Anspruch 1, wobei die Strebe (19) im wesentlichen U-förmig ist, wobei zwei Außenteile (23) durch ein gebogenes Oberteil (22) verbunden sind, wobei die Außenteile dazu bestimmt sind, das Geflügel in der Leistengegend in Eingriff zu nehmen.

3. Vorrichtung nach Anspruch 1 oder 2, die eine Einrichtung (2) zum Aufhängen des Geflügels (3) an den Beinen aufweist.

4. Vorrichtung nach Anspruch 3, die eine Hängefördereinrichtung (1) zum Befördern des Geflügels aufweist, während es an den Beinen aufgehängt ist, und die ferner eine rotierende karussellförmige Vorrichtung aufweist, die entlang ihres Umfangs in regelmäßigen Abständen eine Anzahl von Streben (19) zum Spreizen der Beine des Geflügels trägt, wobei Einrichtungen (14,15) zum Durchführen einer relativen Auf- und Abbewegung der Streben relativ zum an der Hängefördereinrichtung aufgehängten Geflügel vorgesehen sind, wenn die Hängefördereinrichtung das Geflügel in Koordination mit der Rotation der karussellförmigen Vorrichtung um einen Teil des Umfangs der karussellförmigen Vorrichtung befördert.

5. Vorrichtung nach Anspruch 4, wobei die Streben (19) entlang jeweiliger, an der karussellförmigen Vorrichtung angebrachter Führungen durch die Zusammenarbeit zwischen einer feststehenden Bogeneinrichtung (15) und einer an den Streben angebrachten beweglichen Folgeeinrichtung (14) auf- und ab beweglich sind.

6. Vorrichtung nach Anspruch 4, wobei die Streben (19) eine feststehende vertikale Position aufweisen und wobei die Hängefördereinrichtung (1',1") aufeinanderfolgende geneigte Teile zur Auf- und Abbewegung des Geflügels relativ zu den Streben aufweist.

7. Vorrichtung nach Anspruch 1 oder 2, die einen Halter zum Halten der Brust oder des Rückens des Geflügels in einer im wesentlichen horizontalen Position aufweist.

8. Vorrichtung nach einem der vorhergehenden Ansprüche, wobei die erste Einrichtung eine elektrisch leitende Flüssigkeit (20) aufweist, in die der Kopf (5) des Geflügels eingetaucht werden soll, und wobei die Flüssigkeit in einer Anzahl aufeinanderfolgender Behälter (16) enthalten ist, so daß während des Betriebs der Vorrichtung jeder Einzelbehälter nur einen Geflügelkopf gleichzeitig aufnehmen wird.

9. Vorrichtung nach Anspruch 8 und zur Zusammenarbeit mit einer Hängefördereinrichtung zum Befördern des Geflügels bestimmt, während es an seinen Beinen aufgehängt ist, die eine rotierende karussellförmige Vorrichtung aufweist, die in regelmäßigen Abständen längs ihres Umfangs eine Anzahl Flüssigkeitsbehälter (16) trägt, wobei eine relative Auf-und Abbewegung zwischen den Behältern und dem Geflügel stattfindet, wenn die Hängefördereinrichtung das Geflügel um einen Teil des Umfangs der karussellförmigen Vorrichtung befördert.

10. Vorrichtung nach Anspruch 9, wobei die Flüssigkeitsbehälter (16) längs jeweiliger, an der karussellförmige Vorrichtung angebrachter Führungen (12) durch die Zusammenarbeit zwischen einer feststehenden Bogeneinrichtung (10) und einer an den Flüssigkeitsbehältern angebrachten beweglichen Kurvenrolleneinrichtung (17) auf- und ab beweglich sind.

11. Vorrichtung nach Anspruch 10, wobei die Flüssigkeitsbehälter (16) eine feststehende vertikale Position aufweisen und wobei die Hängefördereinrichtung aufeinanderfolgende geneigte Teile zur Auf- und Abbewegung des Geflügels relativ zu den Flüssigkeitsbehältern aufweist.

12. Verfahren zur Geflügelbetäubung, das aufweist: Verbinden des Kopfes (5) des Geflügels (3) mit einem ersten Pol einer Stromquelle (27) und Spreizen der Beine und Ineingriffnahme der Leistengegend des Geflügels unter Verwendung einer Strebe (19), die mit dem zweiten Pol der Stromquelle (27) verbunden ist.

13. Verfahren nach Anspruch 12, wobei die Strebe (19) im wesentlichen U-förmig ist, wobei zwei Außenteile (23) durch ein gebogenes Oberteil (22) verbunden sind, wobei die Außenteile mit den Beinen des Geflügels an der Leistengegend ein Eingriff stehen.

14. Verfahren nach einem der Ansprüche 12 und 13, wobei das Geflügel während der Betäubung in einer an seinen Beinen aufgehängten Position gehalten wird.

15. Verfahren nach einem der Ansprüche 12 und 13, wobei das Geflügel während der Betäubung an der Brust oder am Rücken in einer im wesentlichen horizontalen Position gehalten wird.

## Revendications

1. Appareil pour assommer la volaille (3), comprenant une source de courant (27), des premiers moyens (20) reliés à un premier pôle de la source de courant pour mettre en prise la tête (5) de la volaille et des seconds moyens (19) reliés au pôle opposé de la source de courant pour mettre en prise une partie opposée du corps de la volaille, **caractérisé en ce que** les seconds moyens comprennent une jambe de force (19) pour écarter les pattes de la volaille et venir en prise avec la région de l'aine de la volaille.

2. Appareil selon la revendication 1, dans lequel la jambe de force (19) est sensiblement en forme de U comportant deux parties extérieures (23) reliées par une partie supérieure incurvée (22), lesdites parties extérieures étant destinées à venir en prise avec la volaille au niveau de la région de l'aine.

3. Appareil selon la revendication 1 ou 2, comprenant des moyens (2) pour suspendre la volaille (3) par les pattes.

4. Appareil selon la revendication 3, comprenant un convoyeur de suspension (1) pour transporter la volaille suspendue par les pattes, et comprenant, en outre, un dispositif rotatif de type carrousel qui, à intervalles réguliers le long de sa circonférence, porte un certain nombre de jambes de force (19) destinées à écarter les pattes de la volaille, des moyens (14, 15) étant prévus pour réaliser un mouvement relatif des jambes de force vers le haut et vers le bas par rapport à la volaille suspendue au convoyeur de suspension lorsque le convoyeur de suspension transporte la volaille autour d'une partie de la circonférence du dispositif de type carrousel en coordination avec la rotation du dispositif de type carrousel.

5. Appareil selon la revendication 4, dans lequel les jambes de force sont déplaçables vers le haut et vers le bas le long de guides respectifs (12), fixés au dispositif de type carrousel, par la coopération entre un moyen incurvé fixe (15) et un moyen suiveur mobile (14) fixé aux jambes de force.

6. Appareil selon la revendication 4, dans lequel les jambes de force (19) ont une position verticale fixe et dans lequel le convoyeur de suspension (1', 1") présente des parties inclinées successives pour déplacer la volaille vers le haut et vers le bas par rapport aux jambes de force.

7. Appareil selon la revendication 1 ou 2, comprenant un support destiné à supporter la poitrine ou le dos de la volaille dans une position sensiblement horizontale.

8. Appareil selon l'une quelconque des revendications précédentes, dans lequel les premiers moyens comprennent un liquide électriquement conducteur (20) dans lequel doit être immergée la tête de la volaille, et dans lequel le liquide est contenu dans un certain nombre de conteneurs successifs (16), de façon que, pendant le fonctionnement de l'appareil, chaque conteneur séparé reçoit simultanément une seule tête de volaille.

9. Appareil selon la revendication 8, destiné à coopérer avec un convoyeur de suspension pour transporter la volaille suspendue par les pattes, comprenant un dispositif rotatif de type carrousel qui, à intervalles réguliers le long de sa circonférence, porte un certain nombre de conteneurs de liquide (16), un mouvement relatif vers le haut et vers le bas entre les conteneurs et la volaille ayant lieu lorsque le convoyeur de suspension transporte la volaille autour d'une partie de la circonférence du dispositif rotatif de type carrousel.

10. Appareil selon la revendication 9, dans lequel les conteneurs de liquide (16) sont déplaçables vers le haut et vers le bas le long de guides respectifs (12) fixés au dispositif de type carrousel par la coopération entre un moyen incurvé fixe (18) et un moyen suiveur mobile (17) fixé aux conteneurs de liquide.

11. Appareil selon la revendication 10, dans lequel les conteneurs de liquide (16) ont une position verticale fixe et dans lequel le convoyeur de suspension présente des parties inclinées successives pour déplacer la volaille vers le haut et vers le bas par rapport aux conteneurs de liquide.

12. Procédé pour assommer la volaille, consistant à relier la tête (5) de la volaille (3) à un premier pôle d'une source de courant (27) et à écarter les pattes et à venir en prise avec la région de l'aine de la volaille au moyen d'une jambe de force (19) reliée au second pôle de la source de courant (27).

13. Procédé selon la revendication 12, dans lequel la jambe de force (19) est sensiblement en forme de U comportant deux parties extérieures (23) reliées par une partie supérieure incurvée (22), lesdites parties extérieures venant en prise avec les pattes de la volaille au niveau de la région de l'aine.

14. Procédé selon l'une quelconque des revendications 12-13, dans lequel la volaille, pendant l'assommement, est maintenue dans une position suspendue par les pattes.

15. Procédé selon l'une quelconque des revendications 12-13, dans lequel la volaille, pendant l'assommement, est supportée au niveau de la poitrine ou du dos dans une position sensiblement horizontale.
